# FASCICULE DE BREVET EUROPEEN

(11) **EP 0 603 608 B1**
(45) Date de publication et mention de la délivrance du brevet: **23.07.1997**
(21) Numéro de dépôt: 93119505.1
(22) Date de dépôt: 03.12.1993
(51) Int. Cl.: G01N 29/04, G01N 29/10

(54) **Procédé et dispositif de contrôle non destructif continu des rails en voie à l'aide d'ultrasons**
Verfahren und Vorrichtung zur kontinuierlichen zerstörungsfreien Ultraschallprüfung von Eisenbahnschienen
Method and apparatus for continuous non-destructive ultrasonic testing of railway rails

(30) Priorité: 23.12.1992 CH 3928/92
(43) Date de publication de la demande: 29.06.1994
(73) Titulaire: SPENO INTERNATIONAL S.A., CH-1211 Genève 21 (CH)
(72) Inventeur: Jaeggi, Jean-Pierre, CH-1208 Geneve (CH)
(74) Mandataire: Micheli & Cie

(56) Documents cités:
- CH-A- 672 958
- FR-A- 2 244 173
- US-A- 3 592 052

## Description

La présente invention a pour objet un procédé et un dispositif de contrôle non destructif continu des rails en voie à l'aide d'ultrasons.

Des dispositifs de contrôle en continu par ultrasons des rails de chemin de fer sont par exemple décrits dans le document WO/8504485 ou US-4,235,112 et comportent généralement des sondes émétrices - réceptrices d'ultrasons en contact sonique avec la surface de roulement d'un rail ainsi qu'un dispositif électrique de traitement des signaux générés par les échos des ultrasons émis.

Une des grandes difficultés du contrôle des rails en voie par ultrasons réside dans la discrimination entre les réflexions acoustiques ou échos produits par des défauts des rails, défauts que l'on veut localiser et mettre en évidence, et ceux provenant soit de particularités normales du rail, trous d'éclissage, about de rails etc, soit des signaux parasites dus à des causes électriques ou acoustiques.

Sur les machines existantes cette discrimination peut être faite de deux façons :
- Les signaux issus des sondes ultrasonores sont visualisés la plupart du temps sur un enregistreur papier multipistes tout ou rien dont le défilement peut être asservi à l'avance de la machine. C'est l'opérateur qui décide au vu de ce graphique s'il y a détection d'un défaut ou non. Cette opération peut être menée soit en temps réel par observation permanente de l'enregistrement, soit en temps différé en laboratoire.
- Par l'adjonction sur le système d'auscultation de circuits logiques d'inhibition basés sur le principe du comptage d'impulsions consécutives à des distances acoustiques données correspondant aux zones dans lesquelles certaines particularités connues du rail sont théoriquement localisées.
Ces méthodes présentent les inconvénients suivants :
La première, basée sur l'interprétation humaine, est très dépendante de l'expérience et du sérieux de l'opérateur et les résultats peuvent être, de ce fait, très variables.
La deuxième, faisant moins intervenir l'interprétation humaine, est plus fiable mais les niveaux de logique sont la plupart du temps limités à des comptages simples et, sur-tout, manquent de souplesse car les algorithmes sont définis par construction et ne permettent aucune adaptation en temps réel, par l'opérateur, en fonction des conditions de la voie à ausculter. De plus, ils sont incapables d'éliminer totalement les échos ou signaux parasites.

On connaît encore des documents US 3 592 052 et FR 2 244 173 des installations de contrôle de pièces par ultrasons. Ces installations ne sont pas prévues pour le contrôle en voie des rails de chemin de fer mais pour le contrôle en atelier de pièces usinées ou de tôles. Cette différence est fondamentale et ces installations ne peuvent être transposées pour une inspection in-situ.

Le brevet US 3 592 052 décrit une sonde ultrasonore déplacée le long de la pièce à contrôler et on repère et mesure les positions de la sonde pour des échos maximum ou nuls. A l'aide de ces informations, on calcule ensuite la profondeur du défaut.

Le brevet FR 2 244 173 décrit le déplacement au dessus d'une pièce à contrôler d'un dispositif à ultrasons permettant de mettre en évidence des zones où les échos sont interceptés par des défauts. En utilisant plusieurs groupes de palpeurs présentant des orientations différentes on s'assure qu'aucun défaut ne passera au travers du contrôle.

Aucune de ces installations ne permet non plus de discriminer les signaux parasites, elles présentent donc également les mêmes inconvénients énumérés plus haut.

L'invention consiste en un système d'analyse des signaux acoustiques plus évolué.

Le procédé et le dispositif selon l'invention ont pour but de réaliser une discrimination ou sélection automatique des signaux ou échos correspondant à des défauts des rails en éliminant ceux dus soit à des caractéristiques normales du rail soit à des parasites. De plus la présente invention a également pour but le classement par catégorie ou type des défauts constatés dans les rails.

Le procédé et le dispositif selon l'invention sont définis dans les revendications indépendantes du présent brevet.

Le dessin annexé illustre schématiquement et à titre d'exemple une forme d'exécution du dispositif par la mise en oeuvre du procédé selon l'invention.

La figure 1 est un schéma bloc du dispositif de contrôle.

La figure 2 illustre différentes positions successives de la sonde par rapport à un défaut du rail.

La figure 3 illustre la représentation graphique du défaut détecté selon la figure 2.

Le présent procédé et le dispositif pour sa mise en oeuvre sont basés sur le fait que les défauts dans le rail ne sont pas anarchiques mais ont des caractéristiques connues et constantes en fonction de leur type (orientation, position, environnement).

Chaque type de défaut possède donc une "signature acoustique" qui lui est propre et qui le différencie des autres événements pouvant donner lieu à des réponses acoustiques.

Le principe du procédé et du dispositif consiste donc à mémoriser les réponses acoustiques successives au passage de la sonde ultrasonore au droit du défaut.

On visualise le contenu de cette mémoire sous la forme d'une représentation cartographique, ou matrice, dans laquelle l'axe des X représente l'avance de la sonde pas à pas et l'axe des Y la distance acoustique de la première réflexion sur l'hétérogénéité dans le rail.

Sur la première détection, un masque, ou filtre à forme variable, se positionne automatiquement sur la matrice, délimitant ainsi une zone dans laquelle doivent apparaître les détections suivantes.

Toute apparition en dehors de ce masque n'est pas prise en compte éliminant ainsi toute information ne se rapportant pas au défaut considéré (parasites, anomalies autres etc.).

Les réponses conformes au masque déclenchent une alarme et/ou sont mémorisées pour traitement ultérieur.

Chaque matrice et son masque associé sont visualisés sur un écran et l'opérateur peut, à tout moment, modifier les paramètres du masque (angle, nombre de pas en X, nombre de pas en Y, nombre de pas consécutifs etc.) pour l'adapter aux conditions de la voie à ausculter.

Les avantages de ce dispositif sont de deux ordres :
- une meilleure discrimination des défauts par l'élimination de toute information ne correspondant pas à la signature du type de défaut recherché.
- une exploitation simplifiée par la visualisation des matrices et des masques et par la souplesse d'adapation de la forme des masques en temps réel par l'opérateur.

Ainsi selon le présent procédé de contrôle non destructif en continu d'un rail en voie, on envoie un faisceau d'ultrasons dans le rail pour capter les échos réfléchis puis transforme ces échos en signaux électriques représentatifs de la distance séparant la sonde du défaut détecté.

Simultanément on mesure la position de la sonde le long du rail ou son avancement, et en combinant les signaux représentatifs de la distance de la sonde au défaut et de la position de la sonde le long du rail, on choisit une représentation cartographique des échos reçus.

Parallèlement, l'opérateur choisit un masque, soit une fenêtre électrique, et la superpose à la représentation cartographique des échos. On réalise ainsi une discrimination des échos en ne prenant en compte que ceux tombant dans la fenêtre du masque et correspondant donc à la signature d'un défaut recherché. Suivant le taux d'échos tombant dans la fenêtre du masque on déclenche automatiquement une alarme. On peut bien entendu visualiser et/ou mémoriser le résultat de la comparaison ou superposition du masque et de la représentation cartographique des échos. Il est évident que la forme de la fenêtre du masque, ses dimensions, sa longueur, largeur et son inclinaison peuvent être choisies en fonction du défaut recherché et des caractéristiques du rail ausculté.

Grâce à ce procédé il est possible de détecter automatiquement les défauts d'un rail, sans recourir à l'interprétation humaine, tout en ayant la latitude de moduler le résultat de la mesure en fonction des défauts recherchés et des caractéristiques du rail ausculté. Il est ainsi possible d'allier flexibilité et facilité du contrôle.

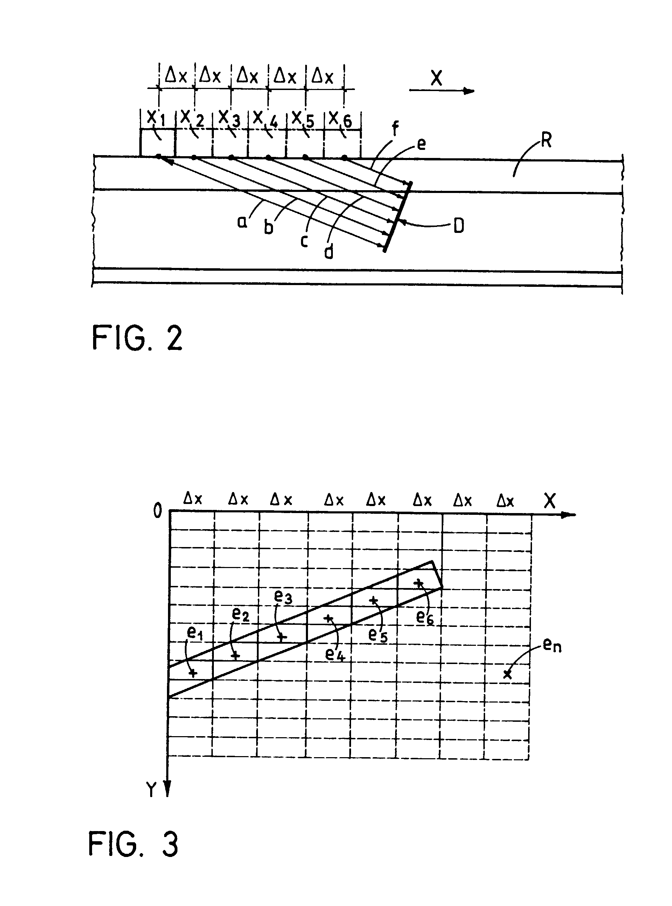

Les figures 2 et 3 illustrent schématiquement la représentation cartographique des échos.

Sur la figure 2 on voit les positions successives X1, X2, X6 de la sonde le long du rail R, distant d'un écart x et le chemin parcouru a, b, c, ..., f, par un faisceau d'ultrasons entre cette sonde et un défaut D.

Sur la figure 3 on voit la représentation cartographique ou matricielle X, Y des échos E1, E2, ..., E6 d' un défaut D en fonction de la position de la sonde le long du rail.

Dans l'exemple illustré les échos E1 - E6 sont alignés sur une droite et correspondent donc bien au défaut illustré à la figure 2. Un écho En est immédiatement reconnu comme non cohérent et devant être éliminé.

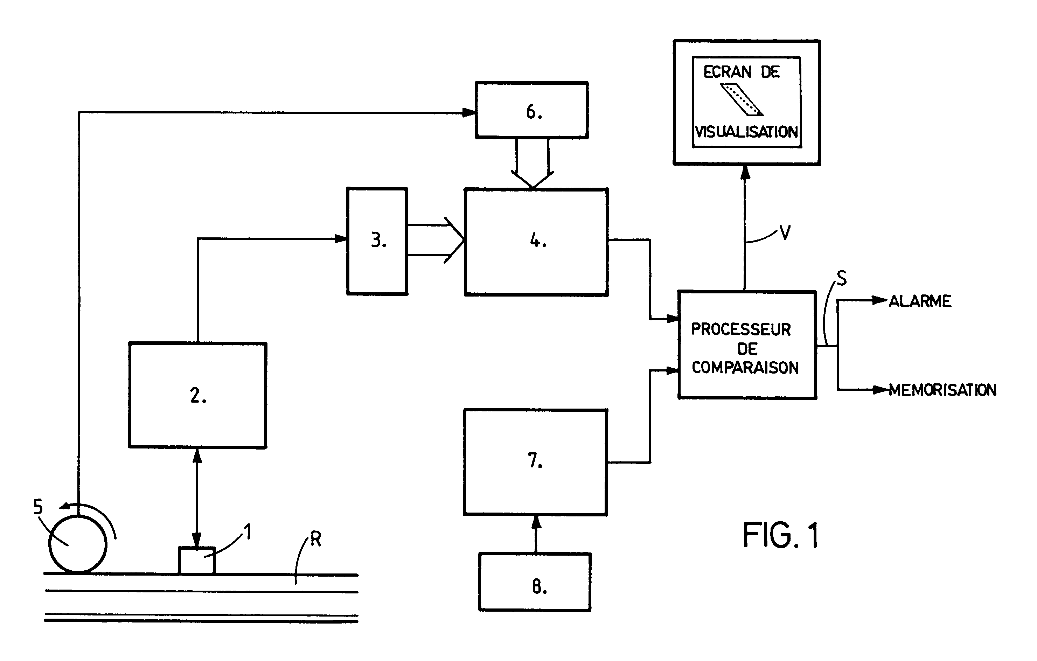

Le dispositif pour la mise en oeuvre du procédé de contrôle décrit est illustré schématiquement à la figure 1. Il comporte une sonde à ultrasons 1 en contact sonique avec un rail R à ausculter et pouvant se déplacer le long de ce rail. Cette sonde 1 est reliée à un émetteur-récepteur d'ultrasons 2. Le récepteur d'ultrasons délivre des signaux électriques correspondant aux échos reçus à un décodeur de données 3 alimentant une matrice 4 ou mémoires géographiques avec des signaux représentatifs de la distance ou du temps de parcours des ultrasons entre la sonde et un défaut du rail détecté.

Ce dispositif comporte encore un capteur 5 délivrant des signaux représentatifs des déplacements de la sonde 1 par rapport au rail R à un décodeur d'adresses 6 branché sur la matrice 4. On génère ainsi dans la matrice 4 une représentation géographique des échos reçus telle qu'illustré à la figure 3.

Le dispositif de contrôle comporte encore un générateur de masques ou de fenêtres 7 contrôlé manuellement par l'opérateur par une interface de réglage de paramètres des masques 8 et les signaux représentatifs des masques sélectionnés, constituant également une matrice x, y sont envoyés dans un comparateur 9 recevant également les signaux représentatifs de la matrice de la mémoire cartographique 4.

Ce comparateur délivre des signaux V à un écran de visualisation correspondant à une représentation vidéo de la superposition du masque et de la mémoire cartographique des échos ainsi qu'un signal de sortie S permettant d'actionner une alarme et/ou de mémoriser le résultat de la comparaison effectuée.

Si on recherche plusieurs types de défauts différents on peut bien entendu comparer le contenu de la matrice ou mémoires cartographiques 4 simultanément ou séquentiellement à plusieurs masques différents.

Grâce à ce procédé et à ce dispositif on élimine complètement les échos ou signaux parasites et on élimine également complètement, et de façon automatique, toute singularité du rail dont la signature ne correspond pas à un défaut à détecter.

## Revendications

1. Procédé de contrôle non destructif en continu des rails en voie à l'aide d'ultrasons selon lequel on déplace une sonde en contact ultrasonique le long d'un rail, émet un faisceau d'ultrasons dans le champignon du rail et réceptionne les échos d'ultrasons réfléchis par des obstacles situés dans le rail, caractérisé par le fait que les émissions d'ultrasons ont lieu successivement en différents points le long du rail distants d'une valeur mesurée; qu'on détermine pour chaque écho la distance acoustique entre le point d'émission et le point de réflexion du faisceau d'ultrasons; qu'on établit par corrélation entre la distance entre points d'émission d'ultrasons et les valeurs des distances acoustiques correspondantes une matrice ou cartographie bidirectionnelle des échos; et par le fait qu'on compare ou superpose cette cartographie des échos à un masque présentant une fenêtre dont la forme, l'orientation et les dimensions sont déterminées par les caractéristiques du rail à mesurer et le type de défaut à mettre en évidence.

2. Procédé selon la revendication 1, caractérisé par le fait qu'on compare ou superpose la cartographie des échos simultanément ou successivement à plusieurs masques différents correspondant à des types de défauts différents.

3. Procédé selon l'une des revendications 1 ou 2, caractérisé par le fait qu'on visualise la superposition de la cartographie des échos et du ou des masques.

4. Procédé selon l'une des revendications précédentes, caractérisé par le fait que la fenêtre du masque délimite, à partir des premiers échos reçus et cartographiés le champs dans lequel doivent se trouver les échos suivants pour correspondre à un défaut du rail.

5. Procédé selon la revendication 4, caractérisé par le fait que lorsque les échos successifs sont disposés à l'intérieur de la fenêtre du masque on mémorise le défaut correspondant et/ou déclenche une alarme.

6. Dispositif pour la mise en oeuvre du procédé selon la revendication 1 qui comporte une sonde déplaçable le long du rail en contact sonique avec celui-ci, un émetteur-récepteur d'ultrasons couplé à cette sonde et un dispositif de mesure du déplacement de la sonde le long du rail, caractérisé par le fait qu'il comporte une mémoire cartographique ou matrice alimentée par les signaux provenant d'une part d'un décodeur d'adresses alimenté par le dispositif de mesure du déplacement de la sonde le long du rail et d'autre part par un décodeur de données alimenté par le récepteur d'ultrasons; un processeur de comparaison alimenté par les signaux de sortie de ladite matrice et par ceux provenant d'un générateur de masque; processeur de comparaison alimentant un écran de visualisation et/ou une mémoire et un dispositif d'alarme.

7. Dispositif selon la revendication 6, caractérisé par le fait que le générateur de masque est piloté par une interface de réglage des paramètres du masque à générer.

## Patentansprüche

1. Verfahren zur kontinuierlichen zerstörungsfreien Ultraschallprüfung von Eisenbahnschienen, worin eine Sonde in Ultraschallberührung entlang einer Schiene verschoben wird, ein Ultraschallwellenbündel in den Schienenkopf gesendet wird und die von in der Schiene befindlichen Hindernissen reflektierten Ultraschallechos empfangen werden, dadurch gekennzeichnet, dass das Aussenden von Ultraschallwellen aufeinanderfolgend an verschiedenen Punkten entlang der Schiene erfolgt, die um einen gemessenen Wert voneinander beabstandet sind; dass man für jedes Echo die akustische Entfernung zwischen dem Sende- und Reflexionspunkt des Ultraschallwellenbündels bestimmt; dass man iiber die Wechselbeziehung zwischen der Entfernung zwischen Ultraschallsendepunkten und den entsprechenden akustischen Distanzwerten eine Matrix oder bidirektionale Kartografie der Echos aufstellt; und dass man diese Kartografie der Echos mit einer Maske vergleicht bzw. einer Maske überlagert, die ein Fenster aufweist, dessen Gestalt, Ausrichtung und Abmessungen durch die Eigenschaften der zu messenden Schiene und durch den zu erkennenden Defekt bestimmt sind.

2. Verfahren gemäss Anspruch 1, dadurch gekennzeichnet, dass die Kartografie der Echos mit mehreren verschiedenen Masken, die verschiedenen Defekttypen entsprechen, gleichzeitig oder aufeinanderfolgend verglichen bzw. diesen überlagert wird.

3. Verfahren gemäss einem der Ansprüche 1, oder 2, dadurch gekennzeichnet, dass man die Überlagerung der Echokartografie und der Maske bzw. Masken bildlich darstellt.

4. Verfahren gemäss einem der vorangehenden Ansprüche, dadurch gekennzeichnet, dass das blaskenfenster, ausgehend von den ersten empfangenen und kartografierten Echos, den Bereich abgrenzt, in dem nachfolgende Echos sich befinden müssen, um einem Schienendefekt zu entsprechen.

5. Verfahren gemäss Anspruch 4, dadurch gekennzeichnet, dass der entsprechende Defekt gespeichert und/oder ein Alarm ausgelöst wird, wenn die nachfolgenden Echos innerhalb des Maskenfensters liegen.

6. Vorrichtung zur Durchführung des Verfahrens gemäss Anspruch 1, die eine Sonde umfasst, die in akustischer Beriihrung mit der Schiene entlang dieser Schiene verschoben werden kann, ferner einen mit dieser Sonde gekoppelten Ultraschallsender und -empfänger sowie eine Messvorrichtung für den Weg der Sonde entlang der Schiene, dadurch gekennzeichnet, dass sie einen kartografischen oder Matrixspeicher umfasst, der von den Signalen gespeist wird, die einerseits von einem Adressendekodierer kommen, der von der Messvorrichtung für den Weg der Sonde entlang der Schiene gespeist wird, und die andererseits von einem Datendekodierer kommen, der vom Ultraschallempfänger gespeist wird; und dass sie ferner einen Vergleichsprozessor umfasst, der von den Ausgangssignalen der benannten Matrix und den von einem Maskengenerator kommenden Signalen gespeist wird und seinerseits einen Bildschirm und/oder einen Speicher sowie eine Alarmvorrichtung versorgt.

7. Vorrichtung gemäss Anspruch 6, dadurch gekennzeichnet, dass der Maskengenerator von einer Schnittstelle für die Anpassung der Parameter der zu erzeugenden Maske gesteuert wird.

## Claims

1. A process for the continuous non destructive testing of the rails of a railway by means of ultrasounds, wherein a sensor moved in ultrasonic contact along a rail, emits a beam of ultrasounds into the rail head and receives the echoes of ultrasounds reflected by obstacles located within the rail, characterized in that the emissions of ultrasounds take place successively at different points along the rail spaced by a measured value; in that for each echo, the acoustic distance between the point of emission and the point of reflexion of the beam of ultrasounds is determined; in that a bidirectional map or matrix of the echoes is established from the correlation between the distance between the points of emission of the ultrasounds and the values of the corresponding acoustic distances; and in that this echo map is compared with or superposed upon a mask having a window, of which the shape, the orientation and the dimensions are determined by the characteristics of the rail to be measured and the type of defect to be identified.

2. A process according to claim 1, characterized in that the echo map is simultaneously or successively compared with or superposed upon several different masks corresponding to different types of defects.

3. A process according to one of claims 1 or 2, characterized in that the superposition of the echo map and of the mask(s) is displayed.

4. A process according to one of the preceding claims, characterized in that the window of the mask defines, from the first echoes received and mapped, the fields in which must be found the following echoes corresponding to a defect of the rail.

5. A process according to claim 4, characterized in that when the successive echoes are located inside the window of the mask, the corresponding defect is memorized and/or an alarm is set off.

6. A device for carrying out the process according to claim 1 which includes a sensor movable along the rail in sonic contact therewith, an ultrasound transceiver coupled to this sensor and a device for measuring the displacement of the sensor along the rail, characterized in that it includes a map matrix or memory supplied by signals arriving, on the one hand, from a decoder of addresses supplied by the device for measuring the displacement of the sensor along the rail and, on the other hand, a data decoder supplied by the ultrasound receiver; a comparator processor supplied with output signals from said matrix and by those arriving from a mask generator; the comparator processor supplying a display screen and/or a memory and an alarm device.

7. A device according to claim 6, characterized in that the mask generator is driven by an interface designed for adjusting the parameters of the mask to be generated.
